# EUROPÄISCHE PATENTANMELDUNG

(11) **EP 2 907 618 A1**
(43) Veröffentlichungstag der Anmeldung: **19.08.2015**
(21) Anmeldenummer: 15151232.4
(22) Anmeldetag: 15.01.2015
(51) Int. Cl.: B23Q 11/08

(54) **Maschinenabdeckung**

(30) Priorität: 17.02.2014 DE 202014100698 U
(71) Anmelder: Arno Arnold GmbH, 63179 Obertshausen (DE)
(72) Erfinder: Gawlik, Josef, 63179 Obertshausen (DE)
(74) Vertreter: advotec.

(57) **Zusammenfassung**

Die Erfindung betrifft eine Maschinenabdeckung zur Abdeckung des Arbeitsbereichs einer Maschine, insbesondere einer Werkzeugmaschine,
- mit mindestens einer längenveränderlichen Schutzabdeckung (04), die im Bereich ihres ersten Endes in Richtung der Längsachse der Schutzabdeckung (04) über ein erstes Anschlusselement (02) ortsfest mittelbar oder unmittelbar an der Maschine und im Bereich ihres zweiten Endes über ein zweites Anschlusselement (03) an einer zumindest in Richtung der Längsachse der Schutzabdeckung (04) verfahrbaren Maschineneinheit befestigbar ist, und
- mit mindestens einer Verriegelungseinrichtung (08, 09), mit der im zusammengefahrenen Zustand der Schutzabdeckung (04) das erste und das zweite Anschlusselement (02, 03) lösbar miteinander koppelbar sind und mit der die Verbindung des ersten Anschlusselements (02) an der Maschine lösbar ist, wenn die beiden Anschlusselemente (02, 03) miteinander gekoppelt werden, und das erste Anschlusselement (02) an der Maschine befestigt wird, wenn die Koppelung der beiden Anschlusselemente (02, 03) gelöst wird,

wobei das erste Anschlusselement (02) als sich im wesentlichen über die gesamte Breite der Schutzabdeckung (04) erstreckende Anschlussschiene ausgebildet ist und die Verriegelungseinrichtung zwei Riegelelemente (08, 09) aufweist, die an der Anschlussschiene (02) verschiebbar angeordnet sind und über eine Betätigungseinrichtung (09) gegenläufig aus einer ersten Position, in der die Riegelelemente (07, 08) das erste Anschlusselement (02) ortsfest an der Maschine verriegeln, in eine zweite Position, in der das erste Anschlusselement (02) von der Maschine gelöst wird, bringbar sind.

## Beschreibung

Die Erfindung betrifft eine Maschinenabdeckung nach dem Oberbegriff des Anspruchs 1.

Maschinenabdeckungen der eingangs genannten Art dienen vorzugsweise zur Abdeckung des Arbeitsbereichs von Werkzeugmaschinen, um zum Einen einen unerwünschten Eingriff einer Bedienperson zu verhindern und zum Anderen, um zu verhindern, dass Materialspäne oder Hilfsstoffe, wie Bohremulsion oder Kühlmittel, aus dem Arbeitsbereich nach außen gelangen. Solche Schutzabdeckungen sind üblicherweise als sogenannter Dachbalg ausgeführt und decken den Arbeitsbereich nach oben ab.

Dabei ist regelmäßig ein Ende der Schutzabdeckung an der Maschine ortsfest fixiert, während das andere Ende der Schutzabdeckung an einer beweglichen Maschineneinheit, beispielsweise einer in X-, Y- oder in X-und Y-Richtung verfahrbaren Bearbeitungssäule, angekoppelt ist.

Um bei einer Bestückung des Arbeitsbereichs mit einem Werkstück oder zum Werkzeugwechsel mittels eines Krans von oben freien Zugang zum Bearbeitungsbereich zum haben, ist es beispielsweise aus der DE 10 2007 043 808 A1 bekannt, die Maschinenabdeckung in zusammengefahrenem Zustand zu fixieren, maschinenseitig zu entriegeln und zusammen mit der verfahrbaren Maschineneinheit aus dem Arbeitsbereich zu verfahren. Die dort beschriebene Maschinenabdeckung ist jedoch mechanisch aufwendig gestaltet und damit teuer und störanfällig.

Ausgehend von diesem Stand der Technik ist es die Aufgabe der vorliegenden Erfindung, eine Maschinenabdeckung der eingangs genannten Art zu schaffen, bei der der Arbeitsbereich in einfacher und kostengünstiger Weise zugänglich zu machen ist.

In zunächst bekannter Weise weist die Maschinenabdeckung zur Abdeckung des Arbeitsbereichs einer Maschine, insbesondere einer Werkzeugmaschine, mindestens eine längenveränderliche Schutzabdeckung auf, die im Bereich ihres ersten Endes in Richtung der Längsachse der Schutzabdeckung über ein erstes Anschlusselement ortsfest mittelbar oder unmittelbar an der Maschine und im Bereich ihres zweiten Endes über ein zweites Anschlusselement an einer zumindest in Richtung der Längsachse der Schutzabdeckung verfahrbaren Maschineneinheit befestigbar ist. "Ortsfest" im Sinn der vorliegenden Anmeldung bedeutet dabei lediglich, dass im Betriebszustand eine sichere Fixierung in Längsrichtung der Schutzabdeckung erfolgen muss. Die Schutzabdeckung selbst kann ohne den Boden der Erfindung zu verlassen insgesamt an der abzudeckenden Maschine verfahrbar sein, insbesondere in einer Richtung quer zur Längsachse der in Rede stehenden Schutzabdeckung.

Um den Arbeitsbereich bei einem Dachbalg, insbesondere durch einen Kran von oben, zugänglich zu machen, weist die Maschinenabdeckung mindestens eine Verriegelungseinrichtung auf, mit der im zusammengefahrenen Zustand der Schutzabdeckung das erste und das zweite Anschlusselement lösbar miteinander koppelbar sind und mit der die Verbindung des ersten Anschlusselements an der Maschine lösbar ist, wenn die beiden Anschlusselemente miteinander gekoppelt werden. Dadurch kann bei einem Verfahren der Maschineneinheit die Maschinenabdeckung insgesamt mitgenommen und aus dem nun zugänglichen Arbeitsbereichverbracht werden. Nach dem beispielsweise Bestücken des Arbeitsbereichs mit einem neuen zu bearbeitenden Werkstück erfolgt wiederum eine Befestigung des ersten Anschlusselements an der Maschine, wobei zudem die Koppelung der beiden Anschlusselemente gelöst wird. Damit befindet sich die Maschinenabdeckung wieder im Betriebszustand.

Gemäß der vorliegenden Erfindung ist das erste Anschlusselement als sich im wesentlichen über die gesamte Breite der Schutzabdeckung erstreckende Anschlussschiene ausgebildet. Die Verriegelungseinrichtung weist dabei zwei Riegelelemente auf, die an der Anschlussschiene verschiebbar angeordnet sind und über eine Betätigungseinrichtung gegenläufig aus einer ersten Position, in der die Riegelelemente das erste Anschlusselement ortsfest an der Maschine verriegeln, in eine zweite Position, in der das erste Anschlusselement von der Maschine gelöst wird, bringbar sind.

Aufgrund dieser mechanisch einfachen Gestaltung ist eine einfache Ver- und Entriegelung der Maschinenabdeckung an der abzudeckenden Maschine möglich, so dass die Maschinenabdeckung dann in einfacher Weise unter Freigabe des Arbeitsbereichs zusammen mit der verfahrbaren Maschineneinheit aus diesem verbracht werden kann.

Nach einem bevorzugten Ausführungsbeispiel der Erfindung weist die Betätigungseinrichtung eine drehbar am ersten Anschlusselement zwischen den beiden Riegelelementen angeordnete Betätigungskulisse auf. Diese Betätigungskulisse ist dabei im wesentlichen oval ausgebildet mit einer Längsachse L und einer Breitenachse B. Durch Verdrehen der Betätigungskulisse ist diese aus einer ersten Position, in der die Längsachse L im wesentlichen in Richtung der Längsachse des ersten Anschlusselementes verläuft, reversibel in eine zweite Position bringbar, in der die Breitenachse B im wesentlichen in Richtung der Längsachse des ersten Anschlusselementes verläuft. Dabei gelangt die Betätigungskulisse mit ihrem Umfang an den Stirnseiten der beiden Riegelelemente zur Anlage. Mit anderen Worten bedeutet dies, dass beim Drehen der Betätigungskulisse in die erste Position die beiden Riegelelemente nach außen in eine Position, in der eine Verriegelung des ersten Anschlusselementes und damit der Maschinenabdeckung ortsfest an der Maschine erfolgt, gezwungen werden, während ein Drehen der Betätigungskulisse in die zweite Position ein Lösen der Verriegelung durch Zurückgleiten der Riegelelemente ermöglicht.

Die Betätigung der Betätigungskulisse kann auf grundsätzlich beliebige Weise erfolgen, beispielsweise mittels eines elektrischen oder pneumatischen Antriebs. Nach einem bevorzugten Ausführungsbeispiel der Erfindung jedoch weist die Betätigungskulisse im Bereich ihrer Drehachse eine Koppeleinrichtung für den Ansatz eines Betätigungswerkzeugs auf. Dabei kann diese Betätigungseinrichtung im einfachsten Fall ein Vierkant sein, auf den ein entsprechender Vierkantschlüssel aufsteckbar ist.

Um das Lösen der Verriegelung beim Drehen der Betätigungskulisse in die zweite Position zu erleichtern sind nach einem weiteren Ausführungsbeispiel der Erfindung die beiden Riegelelemente über mindestens eine in Richtung der Längsachse der Riegelelemente wirkende Federeinrichtung mittelbar oder unmittelbar mit dem ersten Anschlusselement derart verbunden, dass beim gegenläufigen Auseinanderbewegen der beiden Riegelelemente die Federeinrichtung gespannt wird und das gegenläufige Zusammenfahren der beiden Riegelelemente durch die elastische Rückstellkraft der Federeinrichtung bewirkt oder zumindest unterstützt wird.

Eine besonders vorteilhafte Gestaltung der Erfindung ergibt sich, wenn an mindestens einem Riegelelement mindestens ein erster sich in Richtung des zweiten Anschlusselementes erstreckender erster Verriegelungsfinger und am zweiten Anschlusselement mindestens ein sich in Richtung des ersten Anschlusselements erstreckender zweiter Verriegelungsfinger angeordnet sind, die miteinander in lösbaren Eingriff bringbar sind. Dabei weisen die Verriegelungsfinger solche Längen auf, dass der in Verriegelungsstellung zwischen den beiden Anschlusselementen gebildete Abstand mindestens der Länge der zusammengefahrenen Schutzabdeckung entspricht. Dabei können die beiden Verriegelungsfinger im wesentlichen die gleiche Länge aufweisen oder aber unterschiedlich lang sein.

Nach einem besonders bevorzugten Ausführungsbeispiel der Erfindung weist der zweite Verriegelungsfinger eine nut- oder schlitzartig sich in Richtung zur Seitenkante der Schutzabdeckung hin offene Eingriffsöffnung auf, in die ein am ersten Verriegelungsfinger angeordneter Eingriffskörper in Eingriff bringbar ist. Vorzugsweise sind dabei an jedem Anschlusselement axial beabstandet zwei Verriegelungsfinger angeordnet, die jeweils gegenläufig ausgebildet sind. Dadurch kann in einfacher Weise erreicht werden, dass beim gegenläufigen Verschieben der beiden Riegelelemente gleichzeitig eine Entriegelung des ersten Anschlusselementes und eine Kopplung der beiden Anschlusselemente bzw. eine ortsfeste Verriegelung des ersten Anschlusselementes und eine Entkopplung der beiden Anschlusselemente erfolgt.

In grundsätzlich beliebiger Weise kann die ortsfeste Verriegelung des ersten Anschlusselementes an der abzudeckenden Maschine an beliebiger Stelle, beispielsweise unmittelbar am Maschinengestell erfolgen. Nach einem bevorzugten Ausführungsbeispiel der Erfindung jedoch erfolgt die Verriegelung an zwei beabstandeten Führungsschienen der Maschine, auf denen die Schutzabdeckung im Bereich ihrer Längskanten verschieblich gelagert ist, wobei die Führungsschienen im Bereich ihrer Stirnenden jeweils eine Anlagefläche aufweisen, an denen die Stirnenden der Riegelelemente verriegelnd zur Anlage bringbar sind.

Die Schutzabdeckung der erfindungsgemäßen Maschinenabdeckung kann ebenfalls grundsätzlich beliebig ausgebildet sein und beispielsweise mindestens einen Faltenbalg und/oder eine Mehrzahl von teleskopartig verschiebbaren Lamellenelementen aufweisen.

Im Folgenden wird die Erfindung anhand lediglich ein Ausführungsbeispiel zeigender Zeichnungen näher erläutert. Es zeigt:
- **Fig. 1**: in schematischer perspektivischer Darstellung eine erfindungsgemäße Maschinenabdeckung in auseinandergefahrenem Zustand;
- **Fig. 2**: die Maschinenabdeckung nach Fig. 1 in zusammengefahrenem Zustand;
- **Fig. 3**: in einer der Fig. 2 entsprechenden Darstellung die Maschinenabdeckung mit strichliniert skizzierten Verriegelungselementen;
- **Fig. 4**: in schematischer Darstellung in Ansicht von vorne die beiden gegenläufigen Verriegelungselemente mit Betätigungskulisse in verriegelter Darstellung;
- **Fig. 5**: in einer der Fig. 4 entsprechenden Darstellung die Verriegelungselemente mit Betätigungskulisse in entriegelter Darstellung;
- **Fig. 6**: den Verriegelungsbereich des ersten Anschlusselementes an der abzudeckenden Maschine in vergrößerter Darstellung in entriegelter Stellung;
- **Fig. 7**: den Verriegelungsbereich in einer der Fig. 6 entsprechenden Darstellung in verriegelter Stellung; und

- **Fig. 8**: in vergrößerter Darstellung die Verriegelungsfinger der beiden Anschlusselemente.

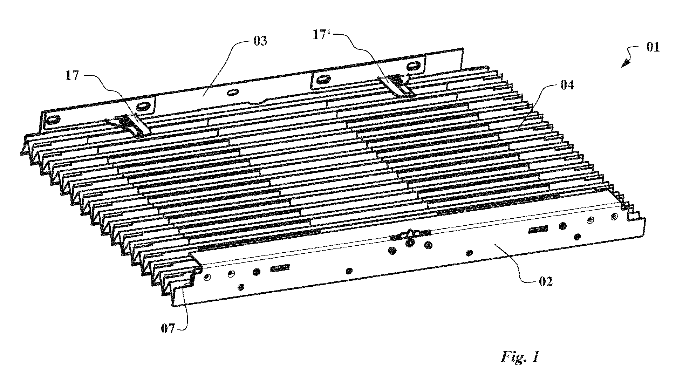

Die zunächst in Fig. 1 dargestellte Maschinenabdeckung 01 weist ein erstes Anschlusselement 02 in Form einer Winkelschiene und ein zweites Anschlusselement 03 in Form einer Anschlussschiene auf. Zwischen den beiden Anschlusselementen 02 und 03 ist eine Schutzabdeckung 04 in Form eines Faltenbalges angeordnet. Diese Schutzabdeckung 04 ist sowohl am Anschlusselement 02 als auch am Anschlusselement 03 befestigt.

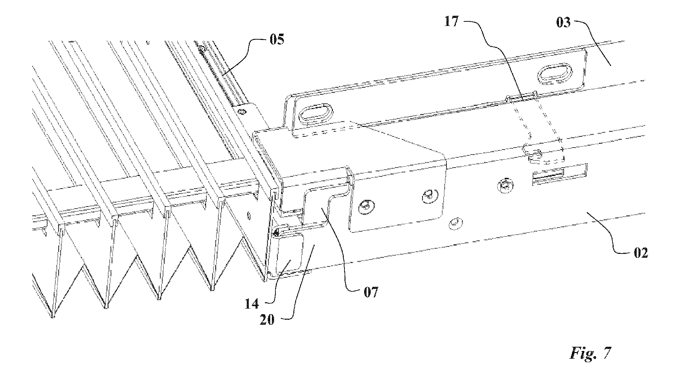

Das erste Anschlusselement 02 ist mit beiden Enden an Führungsschienen 05 (vgl. Fig. 7) der Maschine ortsfest befestigbar bzw. verriegelbar. Mit seinem zweiten Anschlusselement 03 ist die Maschinenabdeckung 01 an einer nicht dargestellten in Längsrichtung der Maschinenabdeckung verfahrbaren Maschineneinheit befestigt, so dass beim Verfahren der Maschineneinheit die Schutzabdeckung auseinandergezogen bzw. zusammengefahren wird, wobei jedoch der Arbeitsbereich abgedeckt bleibt.

Um zum barrierefreien Zugang des Arbeitsbereiches die Maschinenabdeckung 01 vollständig aus den Arbeitsbereich zu entfernen, kann die Verriegelung des ersten Anschlusselementes 02 an der Maschine bzw. der Führungsschiene 05 gelöst werden, worauf das erste Anschlusselement 02 und damit die Maschinenabdeckung insgesamt zusammen mit der verfahrbaren Maschineneinheit nach hinten und damit aus dem Arbeitsbereich verbracht werden kann.

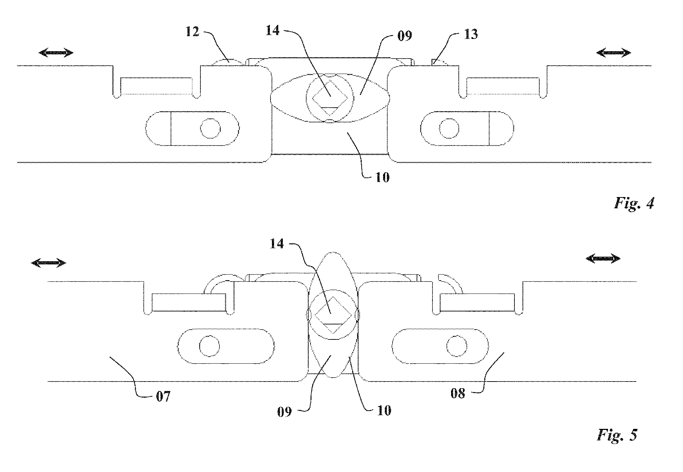

Die Verriegelungseinrichtung 06 weist zwei schienförmige Riegelelemente 07, 08 auf, die in Längsrichtung des ersten Anschlusselementes 02 gegenläufig in Pfeilrichtung verschiebbar an diesem angeordnet sind. Die Verschiebung erfolgt dabei über eine Betätigungseinrichtung, die eine Betätigungskulisse 09 aufweist, die drehbar an einem Kulissenträger 10 angeordnet ist, der wiederum am ersten Anschlusselement 02 befestigt ist. Im Bereich ihrer Drehachse weist die Betätigungskulisse einen Vierkant 11 auf, so dass mittels eines nicht dargestellten Aufsteckschlüssels die Betätigungskulisse 09 zwischen zwei Endpositionen, die in den Fig. 4 und 5 dargestellt sind, gedreht werden kann.

Weiter ist eine lediglich schematisch angedeutet Federeinrichtung aus zwei Federelementen 12 und 13 vorgesehen, die im Bereich ihres ersten Endes mit jeweils einem Riegelelement 07, 08 und im Bereich ihres zweiten Endes am Kulissenträger 10 befestigt sind.

In der in Fig. 4 gezeigten Stellung befinden sich die Riegelelemente 07, 08 in ihrer jeweils äußersten Stellung, die der Verriegelungsstellung entspricht. Wird nun die Betätigungskulisse in der in Fig. 5 gezeigten Stellung gedreht, werden die Riegelelemente 07 und 08 aufgrund der elastischen Rückstellkraft der Federelemente 12 und 13 nach innen in die in Fig. 5 gezeigte entriegelte Stellung gezogen.

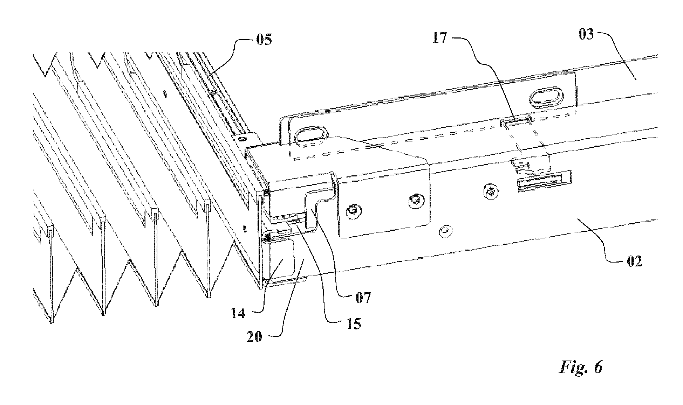

Wie aus den Fig. 6 und 7 ersichtlich wird die erfindungsgemäße Maschinenabdeckung 01 auf beidseitig der Maschinenabdeckung angeordneten Führungsschienen 05 geführt. Im Bereich ihrer Stirnseiten weisen die Führungsschienen 05 einen Anschlagbereich 14 auf, den das erste Anschlusselement 02 mit einem Führungsansatz 20 hintergreift, so dass die Maschinenabdeckung gegen ein unerwünschtes Abgleiten nach außen gesichert ist. Gleichzeitig ist der Führungsansatz 20 jedoch so geformt, dass er unter der Führungsschiene nach Innen in Pfeilrichtung gleiten kann.

In der verriegelten Stellung nach den Fig. 4 und 7 hintergreift das Riegelelement 07 eine Anlagekante 15, so dass das erste Anschlagelement 02 ortsfest an der Führungsschiene 05 fixiert ist. In der entriegelten Stellung nach den Fig. 5 und 6 ist das Riegelelement 02 aus dem Eingriff an der Führungsschiene ausgetreten, so dass nunmehr das erste Anschlusselement 02 in Pfeilrichtung frei verschoben werden kann.

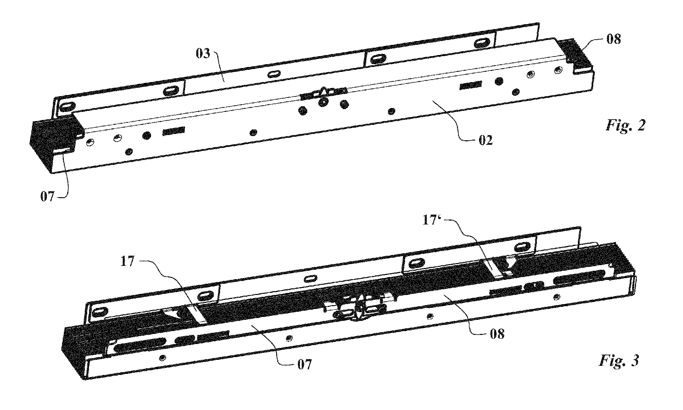

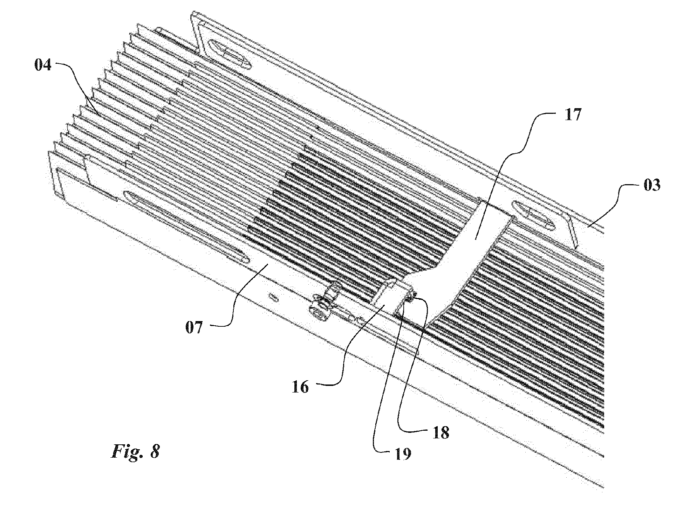

Wie weiter insbesondere aus der Fig. 8 ersichtlich ist, ist am Riegelelement 07 ein erster Verriegelungsfinger 16 angeordnet. Am gegenüberliegenden Abschnitt des zweiten Anschlusselementes 03 ist ein zweiter Verriegelungsfinger 17 angeordnet, der zum ersten Verriegelungsfinger 16 form- und funktionskomplementär ist. Der zweite Verriegelungsfinger weist eine einseitig nach außen offene schlitzartige Nut 18 auf. Der erste Verriegelungsfinger 17 weist einen Eingriffskörper 19 auf, der in der Darstellung nach Fig. 8 vom Verriegelungsfinger 16 nach unten ragt. Spiegelsymmetrisch zu den in der Fig. 8 dargestellten Verriegelungsfingern 16 und 17 ist ein weiteres Paar von Verriegelungsfingern 16' und 17' vorgesehen, wie insbesondere aus Fig. 1 ersichtlich ist. Wird nun bei vollständig zusammengeschobener Maschinenabdeckung (Fig. 2) die B Betätigungskulisse aus der in Fig. 4 gezeigten Verriegelungsstellung in die in Fig. 5 gezeigte Entriegelungsstellung gedreht, erfolgt gleichzeitig mit der Entriegelung an der Führungsschiene 05 eine Kopplung der einander jeweils gegenüberliegenden Verriegelungsfinger 16 und 17 bzw. 16' und 17', so dass bei einem Verfahren der verfahrbaren Maschineneinheit die Maschinenabdeckung insgesamt mitgenommen und der Arbeitsbereich zum Be- und Entladen freigegeben wird.

Nach dem Be- oder Entladen kann dann die Maschinenabdeckung wieder in die Verriegelungsposition zurückgefahren werden, worauf dann durch Drehen der Betätigungskulisse das erste Anschlusselement 02 wieder an der Führungsschiene ortsfest verriegelt wird und gleichzeitig die jeweils gegenüberliegenden Verriegelungsfinger 16 und 17 bzw. 16' und 17'wieder entkoppelt werden.

## Patentansprüche

1. Maschinenabdeckung zur Abdeckung des Arbeitsbereichs einer Maschine, insbesondere einer Werkzeugmaschine,
- mit mindestens einer längenveränderlichen Schutzabdeckung (04), die im Bereich ihres ersten Endes in Richtung der Längsachse der Schutzabdeckung (04) über ein erstes Anschlusselement (02) ortsfest mittelbar oder unmittelbar an der Maschine und im Bereich ihres zweiten Endes über ein zweites Anschlusselement (03) an einer zumindest in Richtung der Längsachse der Schutzabdeckung (04) verfahrbaren Maschineneinheit befestigbar ist, und
- mit mindestens einer Verriegelungseinrichtung (08, 09), mit der im zusammengefahrenen Zustand der Schutzabdeckung (04) das erste und das zweite Anschlusselement (02, 03) lösbar miteinander koppelbar sind und mit der die Verbindung des ersten Anschlusselements (02) an der Maschine lösbar ist, wenn die beiden Anschlusselemente (02, 03) miteinander gekoppelt werden, und das erste Anschlusselement (02) an der Maschine befestigt wird, wenn die Koppelung der beiden Anschlusselemente (02, 03) gelöst wird,
**dadurch gekennzeichnet,**
**dass** das erste Anschlusselement (02) als sich im wesentlichen über die gesamte Breite der Schutzabdeckung (04) erstreckende Anschlussschiene ausgebildet ist und die Verriegelungseinrichtung zwei Riegelelemente (08, 09) aufweist, die an der Anschlussschiene (02) verschiebbar angeordnet sind und über eine Betätigungseinrichtung (09) gegenläufig aus einer ersten Position, in der die Riegelelemente (07, 08) das erste Anschlusselement (02) ortsfest an der Maschine verriegeln, in eine zweite Position, in der das erste Anschlusselement (02) von der Maschine gelöst wird, bringbar sind.

2. Maschinenabdeckung nach Anspruch 1,
**dadurch gekennzeichnet,**
**dass** die Betätigungseinrichtung eine drehbar am ersten Anschlusselement (02) zwischen den beiden Riegelelementen (07, 08) angeordnete Betätigungskulisse (09) aufweist, die im wesentlichen oval mit einer Längsachse L und einer Breitenachse B ausgebildet ist und aus einer ersten Position, in der die Längsachse L im wesentlichen in Richtung der Längsachse des ersten Anschlusselementes (02) verläuft, reversibel in eine zweite Position bringbar ist, in der die Breitenachse im wesentlichen in Richtung der Längsachse des ersten Anschlusselementes (02) verläuft, wobei das Kulissenelement (09) mit seinem Umfang an den Stirnseiten der beiden Riegelelemente (07, 08) zur Anlage gelangt.

3. Maschinenabdeckung nach Anspruch 2,
**dadurch gekennzeichnet,**
**dass** die Betätigungskulisse (09) im Bereich ihrer Drehachse eine Koppeleinrichtung (11) für den Ansatz eines Betätigungswerkzeugs aufweist.

4. Maschinenabdeckung nach einem der Ansprüche 1 bis 3,
**dadurch gekennzeichnet,**
**dass** die beiden Riegelelemente (07, 08) über mindestens eine in Richtung der Längsachse der Riegelelemente (07, 08) wirkende Federeinrichtung (12, 13) mittelbar oder unmittelbar mit dem ersten Anschlusselement (02) derart verbunden sind, dass beim gegenläufigen Auseinanderbewegen der beiden Riegelelemente (07, 08) die Federeinrichtung (12, 13) gespannt wird und das gegenläufige Zusammenfahren der beiden Riegelelemente (07, 08) durch die elastische Rückstellkraft der Federeinrichtung (12, 13) bewirkt oder zumindest unterstützt wird.

5. Maschinenabdeckung nach einem der Ansprüche 1 bis 4,
**dadurch gekennzeichnet,**
**dass** an mindestens einem Riegelelement (07, 08) mindestens ein erster sich in Richtung des zweiten Anschlusselementes (03) erstreckender erster Verriegelungsfinger (16, 16') und am zweiten Anschlusselement (03) mindestens ein sich in Richtung des ersten Anschlusselements erstreckender zweiter Verriegelungsfinger (17, 17') angeordnet sind, die miteinander in lösbaren Eingriff bringbar sind, wobei die Verriegelungsfinger (16, 16'; 17, 17') solche Längen aufweisen, dass der in Verriegelungsstellung zwischen den beiden Anschlusselementen (02, 03) gebildete Abstand mindestens der Länge der zusammengefahrenen Schutzabdeckung (04) entspricht.

6. Maschinenabdeckung nach Anspruch 5,
**dadurch gekennzeichnet,**
**dass** der zweite Verriegelungsfinger (17, 17') eine nut- oder schlitzartig sich in Richtung zur Seitenkante der Schutzabdeckung hin offene Eingriffsöffnung (18) aufweist, in die ein am ersten Verriegelungsfinger (16, 16') angeordneter Eingriffskörper (19) in Eingriff bringbar ist.

7. Maschinenabdeckung nach Anspruch 6,
**dadurch gekennzeichnet,**
**dass** an jedem Anschlusselement (02, 03) axial beabstandet zwei Verriegelungsfinger (16, 16'; 17, 17') angeordnet sind, die jeweils gegenläufig ausgebildet sind.

8. Maschinenabdeckung nach einem der Ansprüche 1 bis 7,
**dadurch gekennzeichnet,**
**dass** die abzudeckende Maschine zwei beabstandete Führungsschienen (05) aufweist, auf denen die Schutzabdeckung im Bereich ihrer Längskanten verschieblich gelagert ist, wobei die Führungsschienen (05) im Bereich ihrer Stirnenden jeweils eine Anlagekante (15) aufweisen, an denen die Stirnenden der Riegelelemente (07, 08) verriegelnd zur Anlage bringbar sind.

9. Maschinenabdeckung nach einem der Ansprüche 1 bis 8,
**dadurch gekennzeichnet,**
**dass** die Schutzabdeckung (04) mindestens einen Faltenbalg und/oder eine Mehrzahl von teleskopartig verschiebbaren Lamellenelementen aufweist.
